# EUROPEAN PATENT SPECIFICATION

(11) **EP 4 538 577 B1**
(45) Date of publication and mention of the grant of the patent: **25.11.2026**
(21) Application number: 25158697.0
(22) Date of filing: 01.03.2018
(51) Int. Cl.: F16F 1/10, B60R 16/02, F16L 3/12, F16L 3/13, F16L 3/223, F16L 55/035, H02G 3/32

(54) **CLIP FOR FASTENING A TUBULAR COMPONENT ON A WORKPIECE**
CLIP ZUM BEFESTIGEN EINES ROHRFÖRMIGEN BAUTEILS AN EINEM WERKSTÜCK
CLIP POUR LA FIXATION D'UN COMPOSANT TUBULAIRE SUR UNE PIÈCE

(43) Date of publication of application: 16.04.2025
(62) Document number(s) of the earlier application(s) in accordance with Art. 76 EPC: 18159359.1 / 3 534 032
(73) Proprietor: Newfrey LLC, New Britain, CT 06053 (US)
(72) Inventor: BOEHM, Sebastian, 35394 Gießen (DE); GANZ, Michael, 35394 Gießen (DE); NDONGMO TAPONDJOU, Patrick Bernard, 35394 Gießen (DE); SCHIEMANN, Jörg, 35394 Gießen (DE); STAU, Bastian, 35394 Gießen (DE)
(74) Representative: SBD IPAdmin

(56) References cited:
- WO-A1-2012/137777
- FR-A1- 2 594 903
- US-A- 4 083 523
- US-A- 5 947 426

## Description

The present invention relates to a clip for fastening a tubular component on a workpiece or support. The tubular component is for example a line such as hydraulic lines, pipes, flexible tubes or electric wires in vehicle, especially for attachment to a vehicle body. Such clips are designed to provide sufficient holding force for the tubular component and to avoid transmission of vibrations, in particular noises. The vibrations which have to be damped arise, for example, on account of oscillations produced when the vehicle is in motion (by braking, by engine vibrations or resonance, etc.).

To this end, it is known to provide a clip for fastening a tubular component on a workpiece comprising a main body with an aperture adapted to receive the tubular component, the aperture being defined by an inner wall with a vibration-damping structure with a vibration damping tongue, wherein the vibration damping tongue is movable from a rest position to a damping position. The clip further comprises a fastening portion connected to the main body for fastening the main body to the workpiece.

The vibration-damping structure is intended to prevent the clip from becoming detached from the workpiece and to enable the articles to be fixed and retained on a permanent basis despite the oscillations.

Document EP0838626 discloses such clips. More particularly, EP0838626 discloses a holder for tubular components with a receiving member with a vibration-damping structure which is formed on a wall of the receiving member and at least partially limits a socket, such that the structure is substantially in the form of a honeycomb, the structure having walls which are arranged round a circumference and have at least one supporting element penetrating into the socket. FR2594903 discloses a device comprising elastic strips that allow adaptation to different dimensions or geometries of cables. US5947426 discloses a holding element made of plastic with wings that may extending spirally arranged at the interior side of a holding area.

Although the prior-art clip described above does perform the vibration-damping function well, the honeycomb structure is cumbersome to manufacture and provides a relative flexibility.

Document WO2010081735 is directed to a clip for fastening an article on a workpiece, said clip having a basic body made of a relatively hard plastic material with an accommodating portion, and a fastening portion, by means of which the basic body can be fastened on the workpiece. The clip further comprises means for damping the transmission of vibrations between the article and the basic body, wherein the vibration-damping means have at least two first tongues which extend from the accommodating portion, taper conically towards one another and are designed to be elastically deformable in the radial direction such that the accommodated article is retained by ends of the tongues.

Such clips need sufficient space to perform a correct vibration damping function.

It is therefore an object of the present invention to provide a mechanically stable clip for tubular components which is compact and which allows the decoupling of a tubular component from a structure, in terms of vibration, and which can be produced more easily with a good damping properties and repeatability.

The present invention provides a clip for fastening a tubular component on a workpiece according to claim 1. The clip comprises:
- a main body with an aperture adapted to receive the tubular component, the aperture being defined by an inner wall with a vibration-damping structure having a vibration damping tongue with a first end connected to the inner wall and a second end being a free end and extending in the aperture, wherein the vibration damping tongue is adapted to support the tubular component extending in the aperture, and is movable from a rest position to a damping position, and
- a fastening portion connected to the main body for fastening the main body to the workpiece,
wherein, in the rest position, the vibration damping tongue extends at least partly in a Fibonacci spiral trajectory.

The rest position means a position in which no external solicitation is applied. Thus, the rest position of the vibration damping tongue is a position in which no external force or solicitation is applied to the vibration damping tongue and corresponds to the position of the vibration damping tongue before the insertion of the tubular component within the aperture. For example, in case the clip is manufactured by known injection molding method, the rest position of the vibration damping tongue, is he position in which the vibration damping tongue is when it exists the mold.

The use of the Fibonacci sequence to manufacture the vibration-damping structure allows a particularly good vibration-damping effect, in particular for pipes used for example in air conditioning systems of motor vehicle. Through the use of Fibonacci numbers, a particular type of logarithmic spiral can be constructed. Such a spiral is called a "golden spiral" or a "Fibonacci spiral".

The vibration damping tongue of the present clip extends in a Fibonacci spiral trajectory. In other words, the vibration damping tongue extend along a path which corresponds at least partly to a Fibonacci spiral trajectory. A Fibonacci spiral can be approximate by a serie of connected quarter-circles drawn inside an array of squares with Fibonacci numbers for dimensions. The Fibonacci sequence is an infinite series of natural numbers with the recursive formation law fn = fn-1 + fn-2 for n> 2 and f1 = f2 = 1.

According to an embodiment, the vibration damping tongue extends between the first end and the second end over a tongue length, and at least 50% of the tongue length extends in a Fibonacci spiral trajectory. More particularly at least 75% of the tongue length extends in a Fibonacci spiral trajectory. Thus the damping effect provided by the Fibonacci spiral trajectory can be seen.

In another embodiment, the entire length of the vibration damping tongue (i.e. from the first end to the second end) extends in a Fibonacci spiral trajectory. The damping effect thus apply on the entire length of the vibration damping tongue.

According to the invention, the main body comprises a plurality of vibration damping tongues extending in a Fibonacci spiral trajectory in the rest position. The presence of several tongues ensure an improved vibration damping effect.

According to an embodiment, the main body comprises four vibration damping tongues extending in a Fibonacci spiral trajectory in the rest position. The four vibration damping tongues may be evenly distributed in the aperture or at least arranged such that the tubular component is completely supported by the four vibration damping tongues.

According to an embodiment, the plurality of damping tongues are arranged spaced apart from each other. Thus one vibration damping tongue will not obstruct or interact with another vibration damping tongue.

According to an embodiment, the main body and the fastening portion are a one piece element. It simplifies the manufacture of the clip.

According to an embodiment, the main body and the fastening portion are made in the same material. No need to use a complex process to manufacture the clip.

According to an embodiment, the clip is made of plastic material, in particular of TPE. The material is reliable and light, which is advantageous in car manufacturing process. Besides, there is no or less risks to damage the tubular component.

According to the invention, the main body comprises a first component, a second component, a film hinge extending between the first and the second component and a locking element, such that the first and second components are movable from an open position, in which the aperture is open and adapted to receive the tubular element to a close position, in which the aperture is circumferentially closed and adapted to surround the tubular element. The locking element is for example arranged facing the film hinge on the other side of the aperture. The two components allow the insertion of the tubular component without great insertion forces and to securely retain the tubular component in the aperture.

According to the invention, the first component defines a first portion of the aperture and is provided with a first vibration damping tongue extending in a Fibonacci spiral trajectory in the rest position, and wherein the second component defines a second portion of the aperture and is provided with a second vibration damping tongue extending in a Fibonacci spiral trajectory in the rest position. Thus, the tubular component is surrounded by vibration-damping tongues.

According to an embodiment, the fastening portion has a stud holder for securing the basic body on a stud which projects in relation to a surface of the workpiece. A stud can thus be assembles (by welding, gluing, ...) to the workpiece and the connection between the clip and the workpiece is easy to realise and secure.

According to an embodiment, the fastening portion comprises a hook for its connection to a workpiece. The assembly between clip and workpiece can be quickly made.

According to an embodiment, the fastening portion further comprises a sliding guide. The fastening to the workpiece can be adjusted and/or the operator guided to realize it..

According to an embodiment, the fastening portion further comprises an elastic foot extending in a Fibonacci spiral trajectory, such that the entire clip can be damped when fastened to a workpiece.

Other characteristics and advantages of the invention will readily appear from the following description of embodiments, provided as non-limitative examples, in reference to the accompanying drawings.

In the drawings:
Fig. 1 shows a front view of a clip according to a first embodiment with a main body having an aperture in which four vibration damping tongues extend in a Fibonacci spiral trajectory;
Fig. 2 shows a perspective view of a clip according to a second embodiment with a fastening portion comprising a hook;
Fig. 3 shows a front view of the clip of Fig. 2;
Fig. 4 shows a perspective view of a clip according to a third embodiment with a fastening portion comprising a stud holder;
Fig. 5 shows a front view of the clip of Fig. 4;
Fig. 6 shows a front view of a clip according to a fourth embodiment with a fastening portion having a stud holder;
Fig. 7 shows a perspective view of the clip of Fig. 6;
Fig. 8 shows a perspective view of a clip according to a fifth embodiment, the clip comprising a fastening portion adapted to be connected to a battery casing.

On the different figures, the same reference signs designate identical or similar elements.

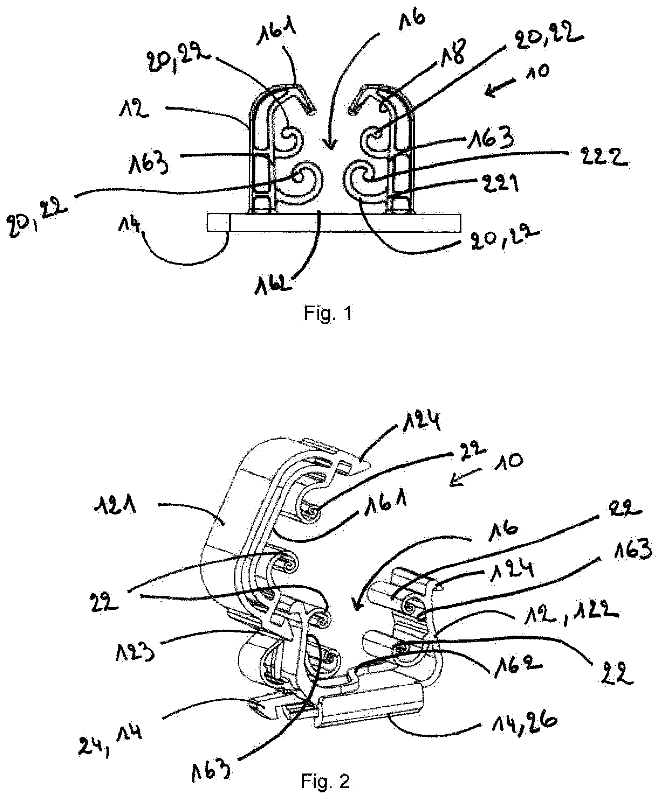

The clip 10 according to the invention, as depicted in Fig. 1 to Fig. 8 comprises a main body 12 and a fastening portion 14. The main body 12 and the fastening portion 14 form, as illustrated, a one-piece component. However in other embodiments (not illustrated)

The main body 12 is provided with an aperture 16 adapted to receive a tubular component (not illustrated). The tubular component is for example an air conditioning line. The tubular component is, more generally, a hydraulic line, a pipe, a flexible tube or an electric wire in vehicle, especially for attachment to a vehicle body.

The main body 12 may be an articulated structure, as depicted in Fig. 2 to 7.

For instance, the articulated structure comprises a first component 121, a second component 122 and a film hinge 123 extending between the first and the second component 121, 122.

The first component 121 can constitute a cover, the second component 122 can constitute a base and the main body 12 can be open and closed. Thus, the first and second components 121, 122 are movable from an open position, in which the aperture 16 is open and adapted to receive the tubular component (also called tubular element) to a close position, in which the aperture 16 is circumferentially closed and adapted to surround the tubular element.

A locking element 124 can be provided opposite the film hinge 123 in order to lock the aperture 16 when the tubular element is arranged inside.

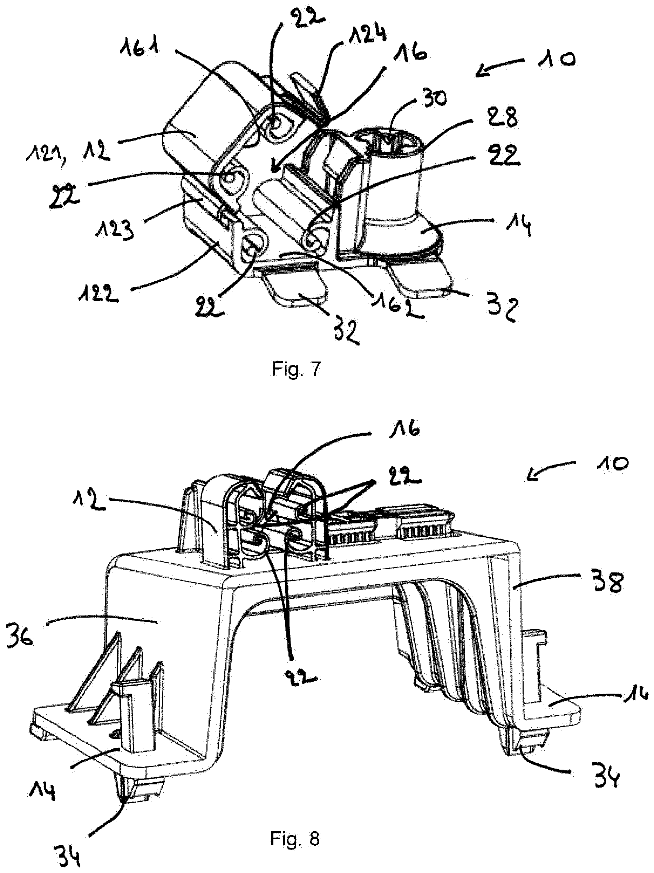

In others embodiments, as illustrated for instance in Fig. 1 and Fig. 8, the main body 12 is not an articulated structure and the tubular element can be inserted into the aperture and retained in the aperture through elastic lateral sides and/or top side.

The aperture 16 is a through aperture and comprises a bottom 161, a top 162 and lateral sides 163 (for instance two lateral sides). The aperture 16 is delimited by an inner wall 18. The inner wall 18 is provided with a vibration-damping structure 20. The vibration damping structure comprises a vibration damping tongue 22. The vibration damping tongue 22 extends between a first end 221 connected to the inner wall and a second end 222. The second end 222 is a free end and extends in the aperture 16.

For instance, the vibration damping structure 20 can comprise one or more vibration damping tongue(s) 22. The one or more vibration damping tongue(s) 22 may be provided in the first component and/or the second component (see embodiments of Fig. 2 to Fig. 7) or on the lateral sides (as illustrated in Fig. 1 and Fig. 8).

More particularly, as illustrated in the figures, the vibration damping structure 20 can comprise four vibration damping tongues 22. Each of the four vibration damping tongues 22 extend from one of the lateral side. In other words, the first ends 221 are each connected to the lateral side 163. As depicted, two first end are connected to a first lateral side, whereas two other first end are connected to a second lateral side.

However, in other embodiments the first end(s) can be connected to the bottom and/or the top and/or the lateral side(s).

The vibration damping tongue(s) 22 extend(s) between the first and the second end 221, 222 in a Fibonacci spiral trajectory.

A Fibonacci series is derived from the recursive equation: f(n+2)=f(n+1)+f(n), where f(0) =1 and f(1)=1. The resulting series of Fibonacci numbers (i.e. 1, 2, 3, 5, 8, 13, 21, 34, 55, 89, 144, ... ) has the property that the ratio of two successive numbers in the series (i.e. f(n)/f(n+1)) converges. These ratio approach the golden ratio φ. A Fibonacci spiral (also called golden spiral) is a spiral in which the angle about the origin between successive sample points is a fixed Fibonacci angle. It is known in the art to approximate a golden spiral by a "whirling rectangle diagram", wherein the opposite corners of squares formed by spiraling golden rectangles are connected by quarter-circles.

The vibration damping tongue 22 follow a path according to the Fibonacci spiral or to the approximate golden spiral calculated by which is called the "whirling rectangle diagram". More particularly, the vibration damping tongue 22 comprises a first surface, a second surface and a lateral surface connecting the first and second surfaces. The lateral surface has a thickness. A centreline can be drawn in the thickness of the vibration damping tongue and this centreline follow, at least partly a Fibonacci spiral trajectory (or the approximation of it mentioned above).

The centreline of the vibration damping tongue is a fictive line arranged at equidistance from the first surface and second surface in cross section. Thus, the centreline of the vibration damping tongue as described form a 2-D curve. This 2-D curve follows at least partly the Fibonacci Spiral. More particularly, said centreline comprises at least a Fibonacci section which follows a path according to the Fibonacci Spiral (or its approximation). The Fibonacci section forms at least 50% of the entire length of the centreline. More particularly, the Fibonacci section forms at least 75% of the entire length of the centreline. In another embodiment, the entire length of the vibration damping tongue follows a Fibonacci spiral trajectory.

The fastening portion 14 is linked to the main body 12. More particularly, the fastening portion and the main body form a one-piece element. The one-piece element can be manufactured by moulding and can be made in a plastic material, for example a TPE.

The fastening portion 14 is adapted to fasten the main body 12 to a workpiece, in order to securely attach the tubular element to the workpiece, allowing the decoupling of the tubular component from the workpiece, in terms of vibration.

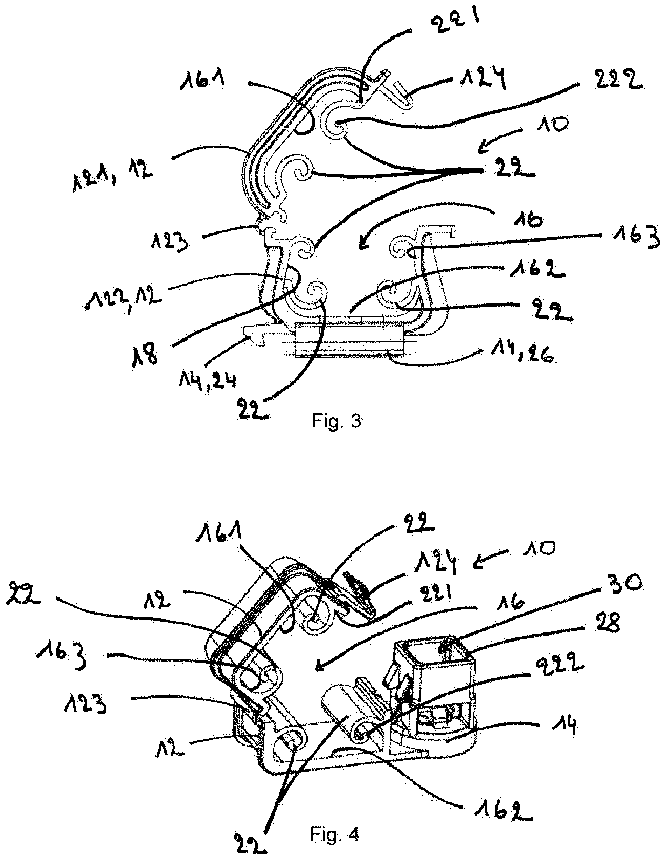

In the embodiment of Fig. 2 and Fig. 3, the fastening portion 14 is arranged on a surface opposite the bottom portion (or bottom side) of the aperture. Thus, the fastening portion 14 and the main body 12 are arranged on each side of the clip 10. The fastening portion 14 comprises a hook 24 adapted to cooperate with a hole provided for example in the workpiece. The fastening portion 14 further comprises a guiding slide 26 provided with indentation. The guiding slide 26 is adapted to cooperate with a corresponding counterpart fixed on the workpiece (or with a workpiece having a portion forming a counterpart).

The fastening portion 14 can also be connected, for example to a stud (not illustrated) which is welded on a structure (the workpiece), such as a vehicle body. The stud can also be glued to the workpiece. If the workpiece contains a thermoplastic material, the stud and the workpiece may also be connected to one another by thermoplastic welding. It is possible for the stud to be provided with latching depressions along its outer circumference and for suitable latching means to be formed on the stud holder in order for the clip to be secured with latching action on the stud. As an alternative to this, the stud may also have a thread in order for the clip to be secured or screwed on or the like.

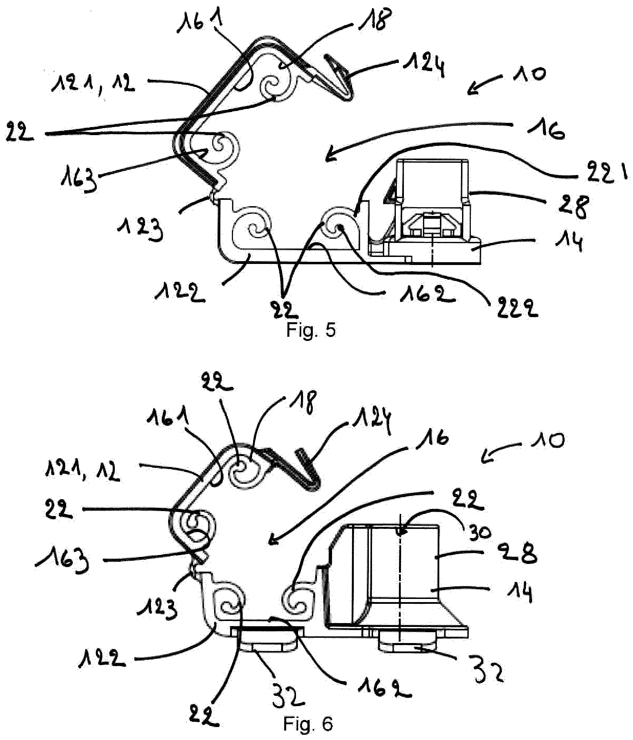

In the embodiments of Fig. 4 and Fig. 5, the fastening portion 14 is a stud holder 28. The fastening portion 14 is arranged facing an outer surface of a lateral wall of the aperture 16. The fastening portion 14 comprises an opening 30 adapted to receive a stud. The stud is designed to fix the clip to a workpiece.

In the embodiment depicted in Fig. 6 and 7, the fastening portion 14 comprises two or four strips 32 and a stud holder 28. The two or four strips 32 are arranged opposite the aperture 16, whereas the stud holder is arranged on the vicinity of a lateral side of the aperture. The strips are for example arranged on each side of the clip.

In Fig. 8, the main body 12 is connected to a fastening portion 14 adapted to be fixed to a battery casing. The fastening portion 14 comprises retaining hooks 34 provided on both side of a fastening portion 14. The fastening portion 14 extends opposite the bottom 161 of the aperture16 and is provided with two legs 36, 38. Each of the legs 38, 40 being provided with a retaining hook 36.

## Claims

1. Clip (10) for fastening a tubular component on a workpiece comprising:
- a main body (12) with an aperture adapted to receive the tubular component, the aperture being defined by an inner wall with a vibration-damping structure having a vibration damping tongue (22) with a first end connected to the inner wall and a second end being a free end and extending in the aperture, wherein the vibration damping tongue is adapted to support the tubular component extending in the aperture, and is movable from a rest position to a damping position, the main body comprising a first component, a second component, a film hinge (123) between the first and second components and a locking element, such that the first and second components are movable between an open position, in which the aperture is adapted to receive the tubular element and a close position, in which the aperture is circumferentially closed and adapted to surround the tubular element, and
- a fastening portion (14) connected to the main body for fastening the main body to the workpiece, the first component is provided with a plurality of said vibration damping tongues (22), and the second component is provided with a plurality of said vibration damping tongues (22), **characterised in that**,
in the rest position, the vibration damping tongues (22) extends in a Fibonacci spiral trajectory.

2. Clip (10) according to claim 1, wherein the main body comprises four vibration damping tongues extending in a Fibonacci spiral trajectory in the rest position.

3. Clip (10) according to claim 1 or 2, wherein the plurality of vibration damping tongues are arranged spaced apart from each other.

4. Clip (10) according to any of claims 1 to 3, wherein the main body and the fastening portion are a one piece element, and wherein the main body and the fastening portion are made in the same material.

5. Clip (10) according to any of claims 1 to 4, wherein the clip is made of plastic material, in particular of TPE.

6. Clip (10) according to any of the preceding claims, wherein the fastening portion (14) has a stud holder for securing the basic body on a stud which projects in relation to a surface of the workpiece.

7. Clip (10) according to any of claims 1 to 5, wherein the fastening portion (14) comprises a hook for its connection to a workpiece.

8. Clip (10) according to claim 7, wherein the fastening portion (14) further comprises a sliding guide.

## Patentansprüche

1. Clip (10) zum Befestigen eines rohrförmigen Bauteils an einem Werkstück, umfassend:
- einen Hauptkörper (12) mit einer Öffnung, die angepasst ist, um das rohrförmige Bauteil aufzunehmen, wobei die Öffnung durch eine Innenwand mit einer schwingungsdämpfenden Struktur definiert ist, die eine schwingungsdämpfende Zunge (22) mit einem ersten Ende, das mit der Innenwand verbunden ist, und einem zweiten Ende, das ein freies Ende ist und sich in die Öffnung erstreckt, aufweist, wobei die schwingungsdämpfende Zunge angepasst ist, um das sich in der Öffnung erstreckende rohrförmige Bauteil zu stützen, und von einer Ruheposition in eine Dämpfungsposition bewegbar ist, wobei der Hauptkörper ein erstes Bauteil, ein zweites Bauteil, ein Filmscharnier (123) zwischen dem ersten und dem zweiten Bauteil und ein Verriegelungselement umfasst, sodass das erste und zweite Bauteil zwischen einer offenen Position, in der die Öffnung angepasst ist, um das rohrförmige Element aufzunehmen, und einer geschlossenen Position bewegbar ist, in der die Öffnung in Umfangsrichtung geschlossen ist und angepasst ist, um das rohrförmige Element zu umgeben, und
- einen Befestigungsabschnitt (14), der mit dem Hauptkörper zum Befestigen des Hauptkörpers am Werkstück verbunden ist, wobei das erste Bauteil mit einer Vielzahl von schwingungsdämpfenden Zungen (22) bereitgestellt ist und das zweite Bauteil mit einer Vielzahl von schwingungsdämpfenden Zungen (22) bereitgestellt ist, **dadurch gekennzeichnet,**
**dass** in der Ruheposition sich die schwingungsdämpfenden Zungen (22) in einer Fibonacci-Spiral-Trajektorie erstrecken.

2. Clip (10) nach Anspruch 1, wobei der Hauptkörper vier schwingungsdämpfende Zungen umfasst, die sich in der Ruheposition in einer Fibonacci-Spiral-Trajektorie erstrecken.

3. Clip (10) nach Anspruch 1 oder 2, wobei die Vielzahl von schwingungsdämpfenden Zungen voneinander beabstandet angeordnet sind.

4. Clip (10) nach einem der Ansprüche 1 bis 3, wobei der Hauptkörper und der Befestigungsabschnitt ein einteiliges Element sind und wobei der Hauptkörper und der Befestigungsabschnitt aus demselben Material hergestellt sind.

5. Clip (10) nach einem der Ansprüche 1 bis 4, wobei der Clip aus Kunststoffmaterial, insbesondere aus TPE, hergestellt ist.

6. Clip (10) nach einem der vorstehenden Ansprüche, wobei der Befestigungsabschnitt (14) einen Bolzenhalter zum Sichern des Grundkörpers auf einem Bolzen aufweist, der in Bezug auf eine Oberfläche des Werkstücks vorsteht.

7. Clip (10) nach einem der Ansprüche 1 bis 5, wobei der Befestigungsabschnitt (14) einen Haken für seine Verbindung mit einem Werkstück umfasst.

8. Clip (10) nach Anspruch 7, wobei der Befestigungsabschnitt (14) ferner eine Gleitführung umfasst.

## Revendications

1. Clip (10) de fixation d'un composant tubulaire sur une pièce à usiner comprenant :
- un corps principal (12) comportant une ouverture adaptée pour recevoir le composant tubulaire, l'ouverture étant délimitée par une paroi intérieure dotée d'une structure amortissant les vibrations munie d'une languette amortissant les vibrations (22) avec une première extrémité reliée à la paroi intérieure et une seconde extrémité étant une extrémité libre et s'étendant dans l'ouverture, dans lequel la languette amortissant les vibrations est adaptée pour supporter le composant tubulaire s'étendant dans l'ouverture, et est mobile d'une position de repos à une position d'amortissement, le corps principal comprenant un premier composant, un second composant, une charnière-film (123) entre les premier et second composants et un élément de verrouillage, de sorte que les premier et second composants sont mobiles entre une position ouverte, dans laquelle l'ouverture est adaptée pour recevoir l'élément tubulaire, et une position fermée, dans laquelle l'ouverture est fermée de manière circonférentielle et adaptée pour entourer l'élément tubulaire, et
- une partie de fixation (14) reliée au corps principal pour fixer ce dernier à la pièce à usiner, le premier composant étant muni d'une pluralité desdites languettes amortissant les vibrations (22), et le second composant étant muni d'une pluralité desdites languettes amortissant les vibrations (22), **caractérisée en ce que**,
dans la position de repos, les languettes amortissant les vibrations (22) s'étendent selon une trajectoire en spirale de Fibonacci.

2. Clip (10) selon la revendication 1, dans lequel le corps principal comprend quatre languettes amortissant les vibrations s'étendant selon une trajectoire en spirale de Fibonacci dans la position de repos.

3. Clip (10) selon la revendication 1 ou 2, dans lequel la pluralité des languettes amortissant les vibrations sont agencées espacées les unes des autres.

4. Clip (10) selon l'une quelconque des revendications 1 à 3, dans lequel le corps principal et la partie de fixation forment un élément d'un seul tenant, et dans lequel le corps principal et la partie de fixation sont fabriqués dans le même matériau.

5. Clip (10) selon l'une quelconque des revendications 1 à 4, dans lequel le clip est en matière plastique, notamment en TPE.

6. Clip (10) selon l'une quelconque des revendications précédentes, dans lequel la partie de fixation (14) comporte un porte-goujon pour fixer le corps de base sur un goujon qui fait saillie par rapport à une surface de la pièce à usiner.

7. Clip (10) selon l'une quelconque des revendications 1 à 5, dans lequel la partie de fixation (14) comprend un crochet pour sa connexion à une pièce à usiner.

8. Clip (10) selon la revendication 7, dans lequel la partie de fixation (14) comprend en outre un guide coulissant.
